# EUROPÄISCHE PATENTSCHRIFT

(11) **EP 2 904 228 B1**
(45) Veröffentlichungstag und Bekanntmachung des Hinweises auf die Patenterteilung: **13.12.2017**
(21) Anmeldenummer: 13779536.5
(22) Anmeldetag: 08.10.2013
(51) Int. Cl.: B01D 53/94, F01N 3/20

(54) **ABGASREINIGUNGSEINRICHTUNG**
EXHAUST GAS CLEANING DEVICE
DISPOSITIF D'ÉPURATION DES GAZ D'ÉCHAPPEMENT

(30) Priorität: 08.10.2012 AT 504322012
(43) Veröffentlichungstag der Anmeldung: 12.08.2015
(73) Patentinhaber: AVL List GmbH, 8020 Graz (AT)
(72) Erfinder: PUSCHNIK, Andreas, A-8020 Graz (AT); CARTUS, Thomas, A-8055 Seiersberg (AT); WIESER, Karl, A-8044 Graz (AT); ZALLINGER, Michael, A-8503 Stainztal (AT); SACHER, Thomas, A-8051 Graz (AT)
(74) Vertreter: Babeluk, Michael
(86) Internationale Anmeldenummer: PCT/EP2013/070890
(87) Internationale Veröffentlichungsnummer: WO 2014/056877

(56) Entgegenhaltungen:
- WO-A1-2010/078052
- DE-A1-102010 021 438
- US-A1- 2011 146 253
- US-A1- 2011 308 234

## Beschreibung

Die Erfindung betrifft eine Abgasreinigungseinrichtung für eine Brennkraftmaschine mit einem Einspritzmodul für ein Reduktionsmittel, insbesondere Harnstoff, mit einem eine Hauptkammer aufweisenden Gehäuse, in welcher Hauptkammer ein Mischrohr stromabwärts einer Dosierkammer angeordnet ist, in welche über zumindest eine Einspritzeinrichtung das Reduktionsmittel eingespritzt wird, wobei das Einspritzmodul für Abgas zumindest einen ersten Eintritt in die Hauptkammer und zumindest einen ersten Austritt aus dem Mischrohr aufweist.

Aus der GB 2 645 151 A ist eine Abgasreinigungseinrichtung für eine Brennkraftmaschine bekannt, welche eine Gehäuse aufweist, in dem ein Partikelfilter und eine Dosierkammer angeordnet sind, wobei in die Dosierkammer eine Einspritzeinrichtung einmündet. Das Gehäuse spannt eine Hauptkammer auf, in welcher ein Mischrohr zwischen der Dosierkammer und einem Austritt für das Abgas angeordnet ist. Das Gehäuse weist weiters einen Eintritt für Abgas auf. Dabei wird das Mischrohr zumindest teilweise von eintretenden Abgasen umströmt.

Die WO 2011/087 550 A2 offenbart ein Abgasnachbehandlungsmodul für eine Brennkraftmaschine, welches Modul eine Mehrzahl an Eintritten aufweist, wobei am Beginn des Mischrohres eine Einspritzeinrichtung für ein Reduktionsmittel angeordnet ist. Das Mischrohr ist in einem Gehäuse des Moduls untergebracht, weiters sind beidseits des Mischrohres SCR-Katalysatoren (SCR: Selective Catalytic Reduction) im Gehäuse angeordnet. Das Abgas strömt über diffusorartige Eintritte in das Mischrohr und gelangt von diesem - nach einer 180°-Umlenkung - in SCR-Katalysatoren, von welchen das Abgas entlang der äußeren Mantelfläche des Mischrohres innerhalb des Gehäuses zu Strömungsaustritten im Gehäuse strömt. Die Eintritte und die Austritte sind auf der selben Stirnseite des Moduls angeordnet. Die Anordnung benötigt viel Bauraum. Da das Mischrohr vom Abgas erst nach zumischen des Reduktionsmittels ummantelt wird, kann es - durch zu niedrige Wandtemperatur - bei ungünstigen Betriebsbedingungen, zum Beispiel niedriger Last, zu Ablagerungen innerhalb des Mischrohres kommen.

Die WO 2010/078052 A1 offenbart eine Abgasnachbehandlungseinrichtung für eine Brennkraftmaschine mit einer in einem Gehäuse angeordneten Dosiereinrichtung für ein Reduktionsmittel. Das Gehäuse weist einen Eintritt und einen Austritt für Abgas auf, wobei die Abgase über den Eintritt dem Gehäuse zugeführt werden und nach Durchströmen eines im Gehäuse angeordneten Filtersubstrates in einen Strömungsmischer gelangen, wo dem Abgas Reduktionsmittel über die Dosiereinrichtung zugesetzt wird. Danach strömt das mit dem Reduktionsmittel versetzte Abgas durch einen zentralen Austritt wieder aus dem Gehäuse. Eine gasdichte Trennung von Hauptkammer und Mischrohr ist nicht vorgesehen. Ähnliche Abgasreinigungseinrichtungen sind auch aus den Veröffentlichungen US2011/0146253 A1, WO 2006/014129 A1 und DE 10 2008 048 796 A1 bekannt. Aufgabe der Erfindung ist es, auf einfache und kompakte Weise eine rasche Verdampfung des Reduktionsmittels zu gewährleisten.
Erfindungsgemäß wird dies dadurch erreicht, dass die Dosierkammer zumindest einen zweiten Eintritt für Abgas und die Hauptkammer zumindest einen zweiten Austritt für Abgas aufweist und innerhalb des Einspritzmoduls die Hauptkammer von der Dosierkammer und vom Inneren des Mischrohres gasdicht getrennt ist. Dadurch, dass die Hauptkammer von der Dosierkammer vollständig getrennt ist, wird das Mischrohr optimal vom heißen Abgas umströmt, und besser als bei bekannten Einrichtungen erwärmt. Somit wird eine raschere Verdampfung des eingespritzten Reduktionsmittels erreicht und Ablagerungen im Mischrohr vermieden.
Vorzugsweise ist dabei vorgesehen, dass zwischen Hauptkammer und Dosierkammer zumindest eine Trennwand angeordnet ist. Durch die Trennwand zwischen Dosierkammer und Hauptkammer wird verhindert, dass das heiße Abgas direkt von der Hauptkammer in die Dosierkammer strömt. Vielmehr verlässt das Abgas - nach Umströmung des Mischrohres - die Hauptkammer durch eigens vorgesehene zweite Austritte. Dabei ist es besonders vorteilhaft, wenn die Hauptkammer zumindest zwei an verschiedenen Seiten einer Längssymmetrieebene des Einspritzmoduls angeordnete zweite Austritte aufweist.
Dabei ist es besonders vorteilhaft, wenn zumindest zwei an verschiedenen Seiten der Längssymmetrieebene des Einspritzmoduls angeordnete zweite Eintritte vorgesehen sind. Im Bereich der Längssymmetrieebene kann zumindest eine Einspritzeinrichtung, vorzugsweise aber auch zwei, drei, vier oder mehr Einspritzeinrichtungen, in die Dosierkammer einmünden. Dabei können herkömmliche Einspritzdüsen aus dem Nutzfahrzeugbereich verwendet werden.
Um ein optimales Erwärmen des Mischrohres zu erreichen, umgibt die Hauptkammer die Mantelfläche des Mischrohres überwiegend, vorzugsweise zur Gänze.
Das Mischrohr und die Hauptkammer können - in Längsrichtung der Achse des Mischrohres betrachtet - kreisrunde, ovale, rechteckige oder andere denkbare Querschnittsformen aufweisen.
Besonders vorteilhaft ist es, wenn die Abgasreinigungseinrichtung eine modulare Bauweise aufweist. So ist in einer bevorzugten Ausführungsvariante der Erfindung vorgesehen, dass an das Einspritzmodul, vorzugsweise an einer Seite des Einspritzmoduls, zumindest ein Verbindungsmodul, angeflanscht ist, wobei das Verbindungsmodul den zweiten Austritt aus der Hauptkammer und den zweiten Eintritt in die Dosierkammer strömungsverbindet. Das Verbindungsmodul kann zumindest einen Katalysator, vorzugsweise einen Dieseloxydationskatalysator und/oder zumindest einen Partikelfilter aufweisen. Das Verbindungsmodul stellt die Strömungsverbindung zwischen der Hauptkammer und der Dosierkammer her. Das Abgas wird dabei von der Hauptkammer kommend über die zweiten Austritte in das Verbindungsmodul geleitet, durchströmt hier eventuell vorhandene Oxydationskatalysatoren und/oder Partikelfilter, und wird weiter zum zweiten Eintritt in die Dosierkammer geleitet. Dabei kann - im Bezug auf eine Längssymmetrieebene des Einspritzmoduls betrachtet - auf jeder Seite des Einspritzmoduls jeweils ein Verbindungsmodul angeflanscht sein.

In weiterer Ausführung kann vorgesehen sein, dass an den ersten Austritt aus dem Mischrohr zumindest ein Katalysatormodul mit zumindest einem Katalysator, vorzugsweise zumindest einem SCR-Katalysator, angeschlossen ist.

Der erste Teil des Mischrohres ist im Einspritzmodul so positioniert, dass das Mischrohr vom heißen Motorabgas umströmt wird, um die Wandtemperatur in allen Betriebsbedingungen hochzuhalten. Durch die höhere Temperatur erfolgt eine schnelle Verdampfung des Reduktionsmittels und es ergeben sich weniger Ablagerungen im Mischrohr.

Das heiße Abgas wird dabei zum Aufheizen des Mischrohres zuerst in die Hauptkammer geleitet. Danach tritt das Abgas wieder aus der Hauptkammer aus und gelangt über den Verbindungsmodul in die Dosierkammer des Einspritzmoduls, wo das Reduktionsmittel zudosiert wird. Im heißen Mischrohr kann eine vollständige Verdampfung des Reduktionsmittels erreicht werden, bevor das Abgas den SCR-Katalysatoren des Katalysatormoduls zugeführt wird.

Die symmetrische Einströmung des Abgases in die Dosierkammer zur Einspritzung des Reduktionsmittels begünstigt die Verdampfung und Vermischung mit dem Reduktionsmittel. Dadurch kann ein zusätzlicher Mischer entfallen und/ oder es kann die Gesamtlänge des Mischrohres kürzer dimensioniert werden. Somit ist eine kompaktere Bauweise möglich.

Die modulare Bauweise ermöglicht es, ein und die selbe Konstruktion für verschiedene Applikationen anzuwenden, beispielsweise für stationäre Motoren oder für Marineanwendungen.

Die Erfindung wird im Folgenden anhand der Figuren näher erläutert. Es zeigen:
- Fig. 1: ein Einspritzmodul einer erfindungsgemäßen Abgasreinigungseinrichtung in einer Schrägansicht in einer ersten Ausführungsvariante;
- Fig. 2: ein Einspritzmodul in einer Schrägansicht in einer zweiten Ausführungsvariante;
- Fig. 3: das Einspritzmodul aus Fig. 1 in einem Schnitt gemäß der Linie III in Fig. 4;
- Fig. 4: das Einspritzmodul in einem Schnitt gemäß der Linie IV-IV in Fig. 5;
- Fig. 5: das Einspritzmodul in einem Schnitt gemäß der Linie V-V in Fig. 4;,
- Fig. 6: bis Fig. 10 das Einspritzmodul jeweils in einem Schnitt mit analog zu Fig. 3 in Ausführungsvariante mit unterschiedlichen Querschnitten;
- Fig. 11: bis Fig. 13 Abgasreinigungseinrichtungen in Schnitten analog zu Fig. 5 in verschiedenen Ausführungsvarianten.

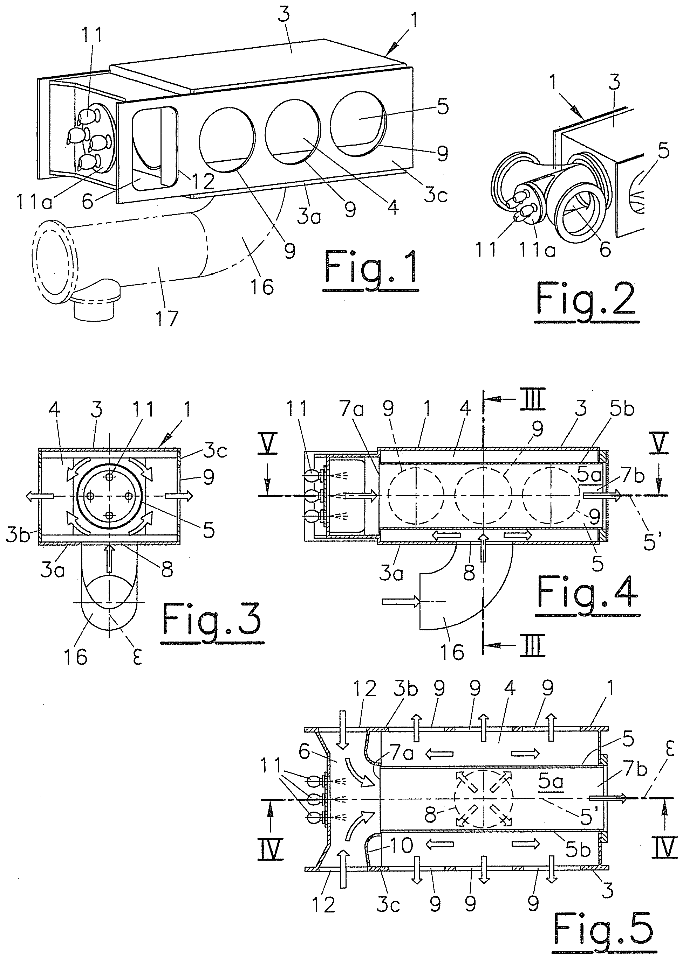

Die Fig. 1 bis Fig. 10 zeigen ein Einspritzmodul 1 einer Abgasreinigungseinrichtung 2 für eine Brennkraftmaschine, insbesondere einem Großmotor, beispielsweise für stationäre oder Marineanwendungen. Das Einspritzmodul 1 weist ein Gehäuse 3 auf, welches eine Hauptkammer 4 umschließt. In der Hauptkammer 4 ist ein Mischrohr 5 angeordnet, wobei das Mischrohr 5 von einer Dosierkammer 6 ausgeht, welche an den Mischrohreintritt 7a angeschlossen ist. Das Mischrohr 5 weist einen ersten Austritt 7b auf, wobei der Innenraum 5a des Mischrohres 5 von der Hauptkammer 4 getrennt ist. Der Mantel 5b des Mischrohres 5 wird von der Hauptkammer 4 vollständig umgeben. Die Hauptkammer 4 weist an der Unterseite 3a des Einspritzmoduls 1 zumindest einen ersten Eintritt 8 und an beiden Seiten 3b, 3c des Einspritzmoduls 1 zweite Austritte 9 auf. Die Hauptkammer 4 ist von der Dosierkammer 6 durch zumindest eine Trennwand 10 gasdicht getrennt.

In die Dosierkammer 6 mündet zumindest eine Einspritzeinrichtung 11 für ein Reduktionsmittel für Stickoxyde, beispielsweise Harnstoff (Urea), ein. Die Dosierkammer 6 weist an jeder Seite 3b, 3c zweite Eintritte 12 für Abgas auf.

Das Einspritzmodul 1 ist im Wesentlichen symmetrisch bezüglich einer die Längsachse 5' des Mischrohres 5 beinhaltenden Längssymmetrieebene ε ausgebildet.

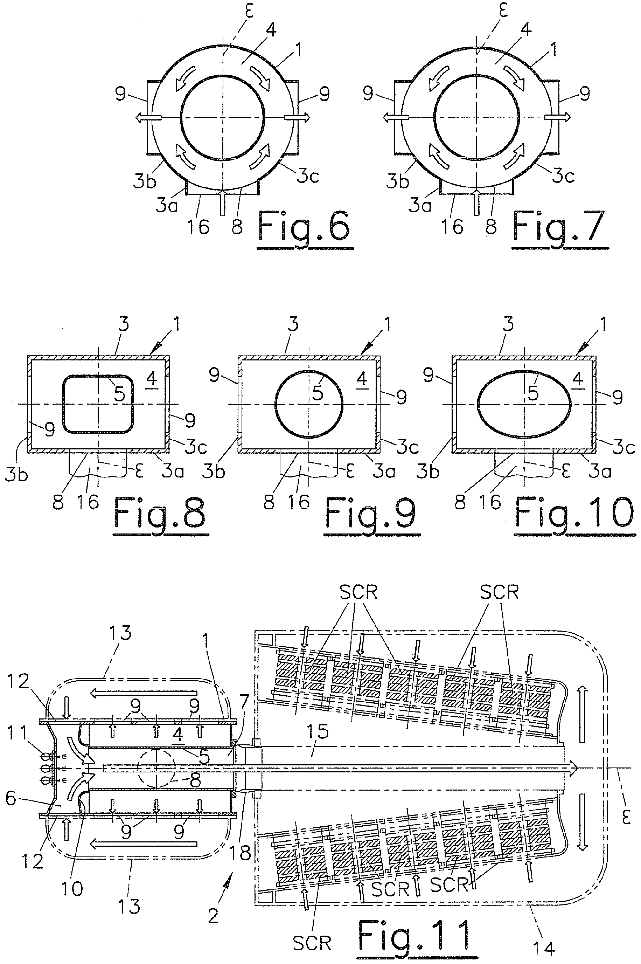

Das Gehäuse 3, insbesondere die Hauptkammer 4, kann in - Längsrichtung der Längsachse 5' gesehen - einen rechteckigen oder quadratischen Querschnitt aufweisen, wie aus den Fig. 3, Fig. 8, Fig. 9, und Fig. 10 hervorgeht. Es kann aber auch einen kreisrunden (Fig. 6) oder ovalen (Fig. 7) Querschnitt aufweisen. Das Mischrohr 5 kann ebenfalls neben einem kreisrunden Querschnitt (Fig. 3, Fig. 6, Fig. 7, Fig. 9) auch einen rechteckigen (Fig. 8) oder ovalen Querschnitt (Fig. 10) aufweisen.

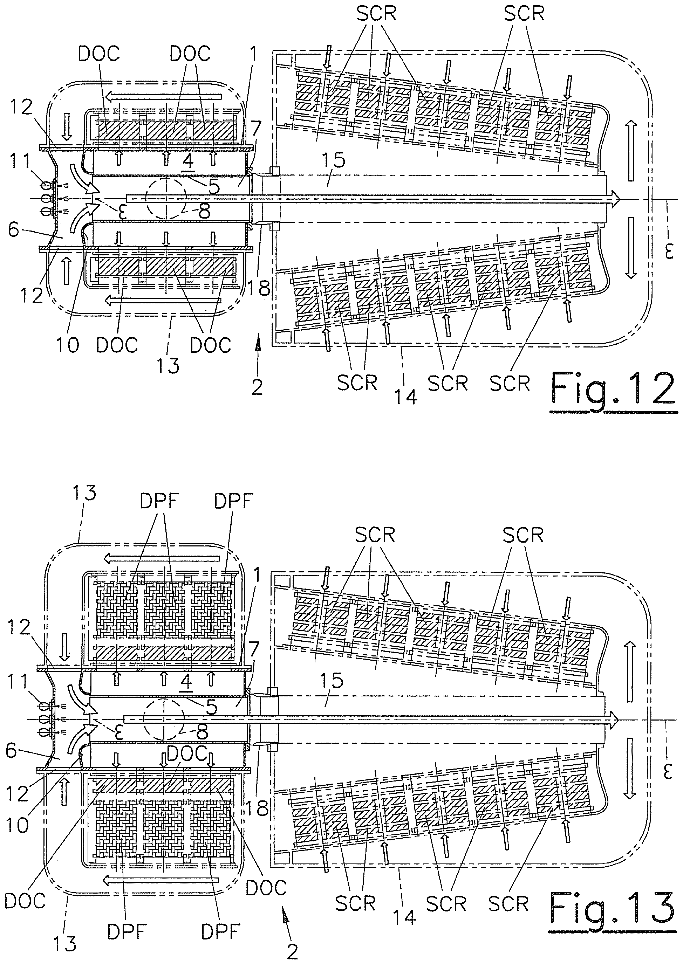

Fig. 11 zeigt eine Ausführungsvariante, bei der beidseits des Einspritzmoduls 1 jeweils ein Verbindungsmodul 13 angeflanscht ist. Jeder Verbindungsmodul 13 stellt die Strömungsverbindung zwischen den zweiten Austritten 9 aus der Hauptkammer 4 und den zweiten Eintritten 12 in die Dosierkammer 6 her. Das Verbindungsmodul 13 kann beispielsweise im Bereich der Austrittsöffnungen 9 Diesel-Oxydationskatalysatoren DOC aufweisen, wie in Fig. 12 gezeigt ist. Weiters können im Verbindungsmodul 13 Dieselpartikelfilter DPF angeordnet sein (siehe Fig. 13).

Wie aus den Fig. 11 bis Fig. 13 ersichtlich ist, kann an den ersten Austritt 7b aus dem Mischrohres 5 ein Katalysatormodul 14 angeflanscht sein, wobei das Katalysatormodul 14 mehrere SCR-Katalysatoren SCR aufweisen kann. Das Katalysatormodul 14 weist in seinem Inneren in Verlängerung des Mischrohres 5 ein weiteres Mischrohr 15 auf.

Die Dosierkammer 6 kann durch einen geschweißten Bauteil gebildet sein, wie in den Fig. 1 und Fig. 5 dargestellt ist. Alternativ zur geschweißten Ausführung kann die Dosierkammer 6 auch gegossen sein (siehe Fig. 2).

In die Dosierkammer 6 können eine oder mehrere Einspritzeinrichtungen 11 einmünden.

Der Weg der Abgase ist in den Fig. 3 bis Fig. 7 sowie Fig. 11 bis Fig. 13 durch Pfeile angedeutet. Das Abgas strömt - vom nicht weiter ersichtlichen Turbolader der Brennkraftmaschine kommend - über die Abgasleitung 16 und den ersten Eintritt 8 an der Unterseite 3a des Gehäuses 3 in die Hauptkammer 4 und umströmt dort den Mantel 5b des Mischrohres 5. Dadurch wird das Mischrohr 5 aufgewärmt. Nach Umströmen des Mischrohres 5 tritt das Abgas durch die seitlichen zweiten Austritte 9 in das Verbindungsmodul 13 aus und gelangt - gegebenenfalls über Oxidationskatalysatoren DOC und/oder Partikelfilter DPF - durch Passieren der zweiten Eintritte 12 in die Dosierkammer 6, wo Reduktionsmittel über die Einspritzeinrichtungen 11 eingespritzt wird. Das Abgas strömt aus der Dosierkammer 6 samt dem über die Einspritzeinrichtungen 11 eingespritzten Reduktionsmittel in das Mischrohr 5, wo - auf Grund der hohen Wandtemperatur des Mischrohres 5 - eine schnelle Verdampfung des Reduktionsmittels erreicht wird. Das Abgas verlässt das Einspritzmodul 1 durch den ersten Austritt 7b und gelangt in das weitere Mischrohr 15 des angeschlossenen Katalysatormoduls 14. Nach Verlassen des weiteren Mischrohres 15 durchströmt das Abgas die SCR-Katalysatoren SCR und verlässt danach die Abgasnachbehandlungseinrichtung 2 über nicht weiter dargestellte Ableitungen.

Diese symmetrische Einströmung des Abgases in die Dosierkammer 6 ermöglicht eine schnelle Vermischung zwischen dem Reduktionsmittel und dem Abgas.

Das Mischrohr 5 ist im Einspritzmodul 1 so positioniert, dass das Mischrohr 5 vom heißen Motorabgas umströmt wird, um die Wandtemperaturen in allen Betriebsbedingungen hochzuhalten. Durch die hohe Wandtemperatur des Mischrohres 5 erfolgt eine schnelle Verdampfung des Reduktionsmittels und es kommt somit zu weniger Ablagerungen im Mischrohr 5.

Durch die gute Vermischung auf Grund der symmetrischen Einströmung des Abgases in die Dosierkammer 6 kann die Verwendung eines zusätzlichen Vermischers und damit entstehende Druckverlust und höhere Kosten vermieden werden und dabei die Länge des weiteren Mischrohres 15 im Katalysatormodul 14 relativ kurz gehalten werden. Als Einspritzeinrichtung 11 können übliche Harnstoffeinspritzdüsen aus dem Nutzfahrzeugbau verwendet werden.

Die modulare Bauweise der Abgasreinigungseinrichtung 2 ermöglicht es, die gleiche Konstruktion für verschiedene Applikationen anzuwenden, wie zum Beispiel für Non Gen Set (Off Road)-, Gen Set (Stationärmotoren)- und Marineanwendungen.

Das Abgas von der Brennkraftmaschine wird über separate Abgasleitungen 16 in die Hauptkammer 4 geführt. Der erste Eintritt 8 in die Hauptkammer 4 kann flexibel gestaltet werden, je nach Erfordernis und Bauraum. Beispielsweise kann ein einziger erster Eintritt 8 für Reihenmotoren oder zwei separate erste Eintritte (nicht dargestellt) für V-Motoren verwendet werden.

Bei Applikationen mit Oxydationskatalysatoren DOC und Partikelfiltern DPF kann stromaufwärts des ersten Eintritts 8 eventuell eine oder mehrere HC-Dosiereinrichtungen 17 in der Abgasleitung 16 für die Dieselpartikelfilterregeneration angeordnet sein, wie in Fig. 1 strichliert dargestellt ist. Die zweiten Austritte 9 aus der Hauptkammer 4 sind auf beiden Seiten 3b, 3c angeordnet, um eine symmetrische Strömung in der Dosierkammer 6 zu ermöglichen. Alternativ dazu ist aber auch eine flexible Gestaltung der zweiten Austritte 9 aus der Hauptkammer 4, mit beispielsweise einer, zwei, drei oder mehreren Öffnungen möglich.

Die Einspritzeinrichtungen 11 könne direkt an der Dosierkammer 6 befestigt werden, oder als Einspritzmodul 11a an der Dosierkammer 6 montiert sein (siehe Fig. 1 und Fig. 2). Je nach Notwendigkeit können eine, zwei, drei, vier oder mehrere Einspritzeinrichtungen 11 verwendet werden.

Auf Grund der Gestaltung der Dosierkammer 6 können kostengünstige Serien-Einspritzeinrichtungen 11 aus dem Nutzfahrzeugbereich verwendet werden. Diese Zudosierung erfolgt dabei ohne Druckluftunterstützung. Es ist aber auch möglich, Einspritzeinrichtungen mit zusätzlicher Druckluftunterstützung, zum Beispiel von Marine-Motoren, zu verwenden.

Das Mischrohr 5 ist in die Hauptkammer 4 integriert und wird in allen Betriebsbedingungen vom heißen Motorabgas umströmt. Um eine gleichmäßige Umströmung zu erzielen, ist es vorteilhaft, das Mischrohr 5 mittig zu positionieren. Es ist aber auch alternativ dazu eine exzentrische Anordnung im Prinzip möglich.

Um Wärmedehnungen zu kompensieren, kann das Katalysatormodul 14 beispielsweise über einen Kompensator 18 am ersten Austritt 7b aus dem Mischrohr 5 befestigt sein.

Um Fertigungskosten zu reduzieren kann das gleiche Einspritzmodul 1 bei verschiedenen Applikationen verwendet werden. Dadurch erhöht sich die Stückzahl und die Fertigungskosten werden geringer.

## Patentansprüche

1. Abgasreinigungseinrichtung (2) für eine Brennkraftmaschine mit einem Einspritzmodul (1) für ein Reduktionsmittel, insbesondere Harnstoff, mit einem eine Hauptkammer (4) aufweisenden Gehäuse (3), in welcher Hauptkammer (4) ein Mischrohr (5) stromabwärts einer Dosierkammer (6) angeordnet ist, in welche über zumindest eine Einspritzeinrichtung (11) das Reduktionsmittel eingespritzt wird, wobei das Einspritzmodul (1) für Abgas zumindest einen ersten Eintritt (8) in die Hauptkammer (4) und zumindest einen ersten Austritt (7b) aus dem Mischrohr (5) aufweist, **dadurch gekennzeichnet, dass** die Dosierkammer (6) zumindest einen zweiten Eintritt (12) für Abgas und die Hauptkammer (4) zumindest einen zweiten Austritt (9) für Abgas aufweist, und dass innerhalb des Einspritzmoduls (1) die Hauptkammer (4) von der Dosierkammer (6) und vom Innenraum (5a) des Mischrohres (5) gasdicht getrennt ist.

2. Abgasreinigungseinrichtung (2) nach Anspruch 1, **dadurch gekennzeichnet, dass** die Hauptkammer (4) von der Dosierkammer (6) durch zumindest eine Trennwand (10) getrennt ist.

3. Abgasreinigungseinrichtung (2) nach Anspruch 1 oder 2, **dadurch gekennzeichnet, dass** die Hauptkammer (4) zumindest zwei - in Bezug auf eine Längssymmetrieebene (ε) des Einspritzmoduls (1) - an verschiedenen Seiten (3b, 3c) des Gehäuses (3) angeordnete zweite Austritte (9) aufweist.

4. Abgasreinigungseinrichtung (2) nach einem der Ansprüche 1 bis 3, **dadurch gekennzeichnet, dass** die Dosierkammer (6) zumindest zwei - in Bezug auf eine Längssymmetrieebene (ε) des Einspritzmoduls (1) - an verschiedenen Seiten (3b, 3c) des Gehäuses (3) angeordnete zweite Eintritte (12) aufweist.

5. Abgasreinigungseinrichtung (2) nach einem der Ansprüche 1 bis 4, **dadurch gekennzeichnet, dass** die Hauptkammer (4) die Mantelfläche (5b) des Mischrohres (5), vorzugsweise überwiegend, besonders vorzugsweise vollständig, umgibt.

6. Abgasreinigungseinrichtung (2) nach einem der Ansprüche 1 bis 5, **dadurch gekennzeichnet, dass** an das Einspritzmodul (1), vorzugsweise an einer Seite des Einspritzmoduls (1), zumindest ein Verbindungsmodul (13), angeflanscht ist, wobei das Verbindungsmodul (13) den zweiten Austritt (9) aus der Hauptkammer (4) und den zweiten Eintritt (12) in die Dosierkammer (6) strömungsverbindet, wobei besonders vorzugsweise - in Bezug auf eine Längssymmetrieebene (ε) des Einspritzmoduls (1) - an verschiedenen Seiten (3b, 3c) des Gehäuses (3) jeweils zumindest ein Verbindungsmodul (13) angeordnet ist.

7. Abgasreinigungseinrichtung (2) nach Anspruch 6, **dadurch gekennzeichnet, dass** das Verbindungsmodul (13) zumindest einen Katalysator, vorzugsweise einen Oxydationskatalysator (DOC), und/oder zumindest einen Partikelfilter (DPF) aufweist.

8. Abgasreinigungseinrichtung (2) nach einem der Ansprüche 1 bis 7, **dadurch gekennzeichnet, dass** an den ersten Austritt (7b) zumindest ein Katalysatormodul (14) mit zumindest einem Katalysator, vorzugsweise zumindest einem SCR-Katalysator (SCR), angeschlossen ist.

9. Abgasreinigungseinrichtung (2) nach einem der Ansprüche 1 bis 8, **dadurch gekennzeichnet, dass** im Bereich der Längssymmetrieebene (ε) zumindest eine Einspritzeinrichtung (11) in die Dosierkammer (6) einmündet.

10. Abgasreinigungseinrichtung (2) nach einem der Ansprüche 1 bis 9, **dadurch gekennzeichnet, dass** das Mischrohr (5) und/oder die Hauptkammer (4) einen kreisrunden, ovalen oder rechteckigen Querschnitt aufweisen.

## Claims

1. An exhaust gas purification device (2) for an internal combustion engine having an injection module (1) for a reducing agent, in particular urea, having a housing (3) comprising a main chamber (4), in which main chamber (4) a mixing tube (5) is arranged downstream of a metering chamber (6), into which the reducing agent is injected via at least one injection device (11), wherein the injection module (1) for exhaust gas has at least one first inlet (8) into the main chamber (4) and at least one first outlet (7b) out of the mixing tube (5), **characterised in that** the metering chamber (6) has at least one second inlet (12) for exhaust gas and the main chamber (4) has at least one second outlet (9) for exhaust gas, and that within the injection module (1) the main chamber (4) is separated from the metering chamber (6) and from the interior (5a) of the mixing tube (5) in a gas-tight manner.

2. The exhaust gas purification device (2) according to claim 1, **characterised in that** the main chamber (4) is separated from the metering chamber (6) by at least one separating wall (10).

3. The exhaust gas purification device (2) according to claim 1 or 2, **characterised in that** the main chamber (4) has at least two second outlets (9) arranged on different sides (3b, 3c) of the housing (3) - in relation to a longitudinal plane of symmetry (ε) of the injection module (1).

4. The exhaust gas purification device (2) according to any one of claims 1 to 3, **characterised in that** the metering chamber (6) has at least two second inlets (12) arranged on different sides (3b, 3c) of the housing (3) - in relation to a longitudinal plane of symmetry (ε) of the injection module (1).

5. The exhaust gas purification device (2) according to any one of claims 1 to 4, **characterised in that** the main chamber (4) preferably predominantly, particularly preferably completely encloses the lateral surface (5b) of the mixing tube (5).

6. The exhaust gas purification device (2) according to any one of claims 1 to 5, **characterised in that** at least one connecting module (13) is flanged onto the injection module (1), preferably on one side of the injection module (1), wherein the connecting module (13) forms a flow connection of the second outlet (9) from the main chamber (4) and the second inlet (12) into the metering chamber (6), wherein particularly preferably at least one connecting module (13) is arranged in each case on different sides (3b, 3c) of the housing (3) - in relation to a longitudinal plane of symmetry (ε) of the injection module (1).

7. The exhaust gas purification device (2) according to claim 6, **characterised in that** the connecting module (13) comprises at least one catalytic converter, preferably an oxidation catalytic converter (DOC), and/or at least one particle filter (DPF).

8. The exhaust gas purification device (2) according to any one of claims 1 to 7, **characterised in that** at least one catalytic converter module (14) having at least one catalytic converter, preferably at least one SCR catalytic converter (SCR), is connected to the first outlet (7b).

9. The exhaust gas purification device (2) according to any one of claims 1 to 8, **characterised in that** at least one injection device (11) discharges into the metering chamber (6) in the region of the longitudinal plane of symmetry (ε).

10. The exhaust gas purification device (2) according to any one of claims 1 to 9, **characterised in that** the mixing tube (5) and/or the main chamber (4) have a circular, oval, or rectangular cross section.

## Revendications

1. Installation d'épuration des gaz d'échappement (2) d'un moteur à combustion interne comportant un module d'injection (1) pour un agent réducteur, notamment de l'urée, un boîtier (3) avec une chambre principale (4) munie d'un tube mélangeur (5) en aval d'une chambre de dosage (6), l'agent réducteur étant injecté dans celle-ci par au moins une installation d'injection (11),
le module d'injection (1) des gaz d'échappement ayant au moins une première entrée (8) dans la chambre principale (4) et au moins une première sortie (7b) du tube mélangeur (5),
**caractérisée en ce que**
la chambre de dosage (6) a au moins une seconde entrée (12) pour les gaz d'échappement et la chambre principale (4) a au moins une seconde sortie (9) pour les gaz d'échappement, et
à l'intérieur du module d'injection (1), la chambre principale (4) est séparée de manière étanche aux gaz, de la chambre de dosage (6) et du volume intérieur (5a) du tube mélangeur (5).

2. Installation d'épuration des gaz d'échappement (2) selon la revendication 1,
**caractérisée en ce que**
la chambre principale (4) est séparée de la chambre de dosage (6) par au moins une cloison (10).

3. Installation d'épuration des gaz d'échappement (2) selon la revendication 1 ou 2,
**caractérisée en ce que**
la chambre principale (4) comporte au moins deux secondes sorties (9) sur des côtés différents (3b, 3c) du boîtier (3) par rapport au plan longitudinal de symétrie (ε) du module d'injection (1).

4. Installation d'épuration des gaz d'échappement (2) selon l'une des revendications 1 à 3,
**caractérisée en ce que**
la chambre de dosage (6) comporte au moins deux secondes entrées (12) sur des côtés différents (3b, 3c) du boîtier (3) par rapport au plan longitudinal de symétrie (ε) du module d'injection (1).

5. Installation d'épuration des gaz d'échappement (2) selon l'une des revendications 1 à 4,
**caractérisée en ce que**
la chambre principale (4) entoure la surface enveloppe (5b) du tube mélangeur (5), de préférence en grande partie et d'une manière particulièrement préférentielle, en totalité.

6. Installation d'épuration des gaz d'échappement (2) selon l'une des revendications 1 à 5,
**caractérisée en ce qu'**
au moins un module de liaison (13) est accolé au module d'injection (1), de préférence à un côté du module d'injection (1) et le module de liaison (13) relie la seconde sortie (9) de la chambre principale (4) et la seconde entrée (12) de la chambre de dosage (6) par une liaison fluidique, et d'une manière particulièrement préférentielle, il y a chaque fois au moins un module de liaison (13) sur différents côtés (3b, 3c) du boîtier (3) par rapport au plan longitudinal de symétrie (ε) du module d'injection (1).

7. Installation d'épuration des gaz d'échappement (2) selon la revendication 6,
**caractérisée en ce que**
le module de liaison (13) comporte au moins un catalyseur, de préférence un catalyseur oxydant (DOC) et/ou au moins un filtre à particules (DPF).

8. Installation d'épuration des gaz d'échappement (2) selon l'une des revendications 1 à 7,
**caractérisée en ce que**
la première sortie (7b) a au moins un module de catalyseur (14) avec au moins un catalyseur, de préférence au moins un catalyseur (SCR).

9. Installation d'épuration des gaz d'échappement (2) selon l'une des revendications 1 à 8,
**caractérisée en ce qu'**
au moins une installation d'injection (11) débouche dans la chambre de dosage (6) dans la zone du plan longitudinal de symétrie (ε).

10. Installation d'épuration des gaz d'échappement (2) selon l'une des revendications 1 à 9,
**caractérisée en ce que**
le tube mélangeur (5) et/ou la chambre principale (4) ont une section circulaire, ovale ou rectangulaire.
